# EUROPÄISCHE PATENTSCHRIFT

(11) **EP 0 811 018 B1**
(45) Veröffentlichungstag und Bekanntmachung des Hinweises auf die Patenterteilung: **02.12.1998**
(21) Anmeldenummer: 96904059.1
(22) Anmeldetag: 10.02.1996
(51) Int. Cl.: C08F 2/32, C08J 3/12, D06P 1/52

(54) **AGGLOMERIERTE POLYMERTEILCHEN AUS WASSERQUELLBAREN POLYMERISATEN, VERFAHREN ZU IHRER HERSTELLUNG UND IHRE VERWENDUNG**
AGGLOMERATED POLYMER PARTICLES FROM WATER-SWELLABLE POLYMERS, PROCESS FOR PRODUCING SAID POLYMER PARTICLES AND THE USE OF SAID PARTICLES
PARTICULES AGGLOMEREES DE POLYMERES CONSTITUEES DE POLYMERISATS SUSCEPTIBLES DE GONFLER AU MOUILLAGE AVEC DE L'EAU, LEUR PROCEDE DE PRODUCTION ET LEUR UTILISATION

(30) Priorität: 23.02.1995 DE 19506287
(43) Veröffentlichungstag der Anmeldung: 10.12.1997
(73) Patentinhaber: BASF AKTIENGESELLSCHAFT, 67056 Ludwigshafen (DE)
(72) Erfinder: RÜBENACKER, Martin, D-67122 Altrip (DE); SCHNEIDER, Reinhard, D-67136 Fussgönheim (DE); NIEBERLE, Jürgen, D-67157 Wachenheim (DE); MEYER, Harald, D-67157 Wachenheim (DE); HARTMANN, Heinrich, D-67117 Limburgerhof (DE)
(86) Internationale Anmeldenummer: EP9600577
(87) Internationale Veröffentlichungsnummer: WO9626222

(56) Entgegenhaltungen:
- WO-A-92/13912

## Beschreibung

Die Erfindung betrifft agglomerierte Polymerteilchen aus wasserquellbaren Polymerisaten mit einem mittleren Teilchendurchmesser von 20 bis 5000 µm, wobei die agglomerierten Polymerteilchen aus Primärteilchen mit einem mittleren Teilchendurchmesser von 0,1 bis 15 µm bestehen und durch Polymerisieren von wasserlöslichen Monomeren in Gegenwart von Reglern und von Vernetzungsmitteln nach Art einer Wasser-in-Öl-Polymerisation und anschließendes azeotropes Entwässern der die Primärteilchen enthaltenden Wasserin-Öl-Polymeremulsionen in Gegenwart von agglomerierend wirkenden Polyalkylenglykolen, die
(a) durch Anlagerung von C₂- bis C₄-Alkylenoxiden an Alkohole, Phenole, Amine oder Carbonsäuren erhältlich sind, und
(b) mindestens 2 Alkylenoxid-Einheiten einpolymerisiert enthalten,
herstellbar sind und beim Eintragen in ein wäßriges Medium in die Primärteilchen zerfallen, Verfahren zur Herstellung der agglomerierten Polymerteilchen sowie ihre Verwendung als Verdickungsmittel zur Erhöhung der Viskosität wäßriger Systeme.

Aus der DE-C-36 41 700 ist ein Verfahren zur Herstellung von Wasser-in-Öl-Emulsionen vernetzter, wasserquellbarer Polymerisate bekannt, wobei man wasserlösliche Monomere und Vernetzer in Form einer Wasser-in-Öl-Emulsion unter Einwirkung wasserlöslicher Azostarter in Gegenwart von Emulgatoren mit einem HLB-Wert von mindestens 10 polymerisiert. Die Polymerisate werden nicht isoliert, sondern direkt in Form der Wasser-in-Öl-Polymeremulsionen als Verdickungsmittel verwendet, z.B. bei der Herstellung von Textildruckpasten.

Aus der EP-A-0 343 840 sind feinteilige vernetzte Polymerisate mit einer Teilchengröße von < 20 µm bekannt. Sie werden durch Polymerisieren von wasserlöslichen Monomeren zusammen mit Vernetzern nach Art einer Wasser-in-Öl-Polymerisation in Gegenwart von radikalischen Polymerisationsinitiatoren hergestellt. Die Polymerisate werden ebenfalls nicht isoliert, sondern man destilliert lediglich das Wasser weitgehend aus den Emulsionen und versetzt die Emulsionen anschließend mit einem Öl-in-Wasser-Emulgator, um das Gemisch leicht im Wasser zu dispergieren. Die Polymerisate werden als Verdickungsmittel in Pigmentdruckpasten verwendet. Beim Pigmentdruck verbleibt das Verdickungsmittel zusammen mit dem Bindemittel der Pigmentdruckpaste auf dem bedruckten Textilgut. Die oben beschriebenen Verdickungsmittel sind jedoch nicht für den Textildruck mit solchen Druckpasten geeignet, die lösliche Farbstoffe enthalten, wie Reaktivfarbstoffe oder Dispersionsfarbstoffe, weil solche Textildrucke nachgewaschen werden und das Verdickungsmittel nicht vollständig auswaschbar ist. Die bekannten Verdickungsmittel verbleiben auf der Ware und geben ihr einen harten Griff. Die bekannten Verdickungsmittel sind außerdem elektrolytempfindlich, so daß sie beim Druck mit Reaktivfarbstoffen, bei denen die Druckpasten zusätzlich zum ionischen Farbstoff noch größere Mengen an Salzen enthalten, nicht ausreichend wirksam sind.

In der WO-A-92/13912 werden die eingangs beschriebenen agglomerierten Polymerteilchen offenbart. Die agglomerierten Polymerteilchen liegen in Form eines Pulvers vor. Die vernetzten, wasserquellbaren Polymerpulver werden als Verdickungsmittel für wäßrige Systeme, insbesondere als Verdickungsmittel für Textildruckpasten eingesetzt. Diese Polymerisate haben jedoch den Nachteil, daß sie nicht auswaschbar sind und der bedruckten Ware dadurch einen zu harten Griff verleihen.

Der Erfindung liegt die Aufgabe zugrunde, neue Stoffe zur Verfügung zustellen, die beim Einsatz als Verdickungsmittel für den Druck mit löslichen Farbstoffen aus der bedruckten Ware gut ausgewaschen werden können und die eine gute Verdickungswirkung in elektrolythaltigen Druckpasten entfalten.

Die Aufgabe wird erfindungsgemäß gelöst mit agglomerierten Polymerteilchen aus wasserquellbaren Polymerisaten mit einem mittleren Teilchendurchmesser von 20 bis 5000 µm, wobei die agglomerierten Polymerteilchen aus Primärteilchen mit einem mittleren Teilchendurchmesser von 0,1 bis 15 µm bestehen, und durch Polymerisieren von wasserlöslichen Monomeren in Gegenwart von Reglern und von Vernetzungsmitteln nach Art einer Wasser-in-Öl-Polymerisation und anschließendes azeotropes Entwässern der die Primärteilchen enthaltenden Wasser-in-Öl-Polymeremulsion zu mindestens 80 % in Gegenwart von agglomerierend wirkenden Polyalkylenglykolen, die
(a) durch Anlagerung von C₂- bis C₄-Alkylenoxiden an Alkohole, Phenole, Amine oder Carbonsäuren erhältlich sind, und
(b) mindestens 2 Alkylenoxid-Einheiten einpolymerisiert enthalten,
herstellbar sind und beim Eintragen in ein wäßriges Medium in die Primärteilchen zerfallen, wenn man die Regler in Mengen von 1 bis 10 Gew.-% und die Vernetzer in Mengen von mindestens 1000 ppm, jeweils bezogen auf die Monomeren, bei der Wasser-in-Öl-Polymerisation einsetzt.

Gegenstand der Erfindung ist außerdem ein Verfahren zur Herstellung der genannten agglomerierten Polymerteilchen durch Polymerisieren von wasserlöslichen Monomeren in der wäßrigen Phase einer Wasser-in-Öl-Emulsion in Gegenwart von Wasser-in-Öl-Emulgatoren, Polymerisationsinitiatoren, Reglern und Vernetzern und anschließendes azeotropes Entwässern der Wasser-in-Öl-Polymeremulsionen zu mindestens 80 % in Gegenwart von 1 bis 40 Gew.-%, bezogen auf die Polymeren, an agglomerierend wirkenden Polyalkylenglykolen, die
(a) durch Anlagerung von C₂- bis C₄-Alkylenoxiden an Alkohole, Phenole, Amine oder Carbonsäuren erhältlich sind, und
(b) mindestens 2 Alkylenoxid-Einheiten einpolymerisiert enthalten,
unter Agglomeration der Primärteilchen der Wasser-in-Öl-Polymeremulsionen und Isolieren der agglomerierten Polymerteilchen, wenn man die Regler in Mengen von 1 bis 10 Gew.-% und die Vernetzer in Mengen von mindestens 1000 ppm, jeweils bezogen auf die Monomeren, einsetzt.

Bei der Polymerisation können sämtliche wasserlöslichen ethylenisch ungesättigten Monomeren eingesetzt werden. Bei diesen Monomeren handelt es sich beispielsweise um ethylenisch ungesättigte C₃- bis C₆-Carbonsäuren, wie Acrylsäure, Methacrylsäure, Itaconsäure, Maleinsäure, Fumarsäure und sowie um die Amide dieser Carbonsäuren, insbesondere Acrylamid und Methacrylamid. Weitere geeignete wasserlösliche Monomere sind beispielsweise Acrylamidomethylpropansulfonsäure, Vinylsulfonsäure, Vinylphosphonsäure und Vinylmilchsäure.

Weitere geeignete wasserlösliche ethylenisch ungesättigte Monomere sind Di-C₁- bis C₃-Alkylamino-C₂- bis C₆-Alkyl(meth)acrylate, wie Dimethylaminoethylacrylat, Dimethylaminoethylmethacrylat, Diethylaminoethylacrylat, Diethylaminoethylmethacrylat, Dimethylaminopropylacrylat, Dimethylaminobutylacrylat, Dimethylaminoneopentylacrylat und Dimethylaminoneopentylmethacrylat. Die basischen Acrylate können in Form der Salze mit anorganischen Säuren oder Carbonsäuren mit 1 bis 4 Kohlenstoffatomen oder auch in quaternisierter Form der Polymerisation unterworfen werden. Geeignet sind auch olefinisch ungesättigte Nitrile, wie Acrylnitril.

Außerdem eignen sich wasserlösliche Diallylammoniumverbindungen der allgemeinen Formeln 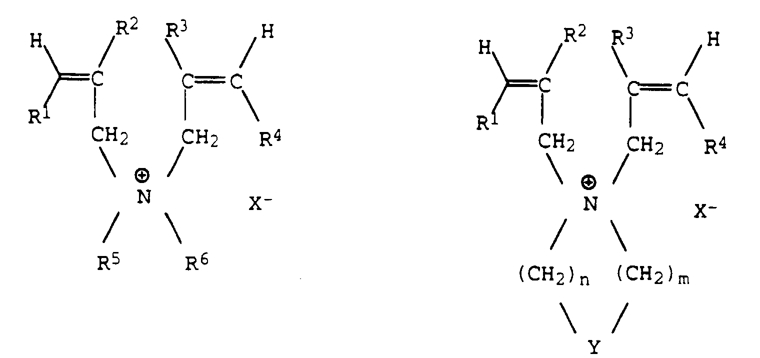
in der X⁻ für ein Halogenidion, wie Chlorid-, Fluorid-, Bromidund Iodid- oder ein Hydroxid-, Nitrat-, Methosulfat-, Hydrogensulfat- oder Dihydrogenphosphation steht, n und m ganze Zahlen von 1 bis 2, vorzugsweise n = m = 2,
Y = 〉N-Methyl, 〉N-Ethyl, vorzugsweise ein Sauerstoffatom oder eine 〉CH₂-Gruppe, und
R¹, R², R³ und R⁴ jeweils ein Wasserstoff oder einen Alkylrest mit 1 bis 6 Kohlenstoffatomen und R⁵ und R⁶ H oder einen Alkylrest, der geradkettig oder verzweigtkettig sein kann, mit 1 bis 18 Kohlenstoffatomen, vorzugsweise 1 bis 6 Kohlenstoffatomen oder einen Aryl- und/oder Benzylrest bedeuten.

Derartige diolefinisch ungesättigte Monomere sind z.B. Dimethyldiallylammoniumchlorid, Dimethyldiallylammoniumbromid, Diethyldiallylammoniumchlorid, Methyl-tert.-butyldiallylammoniunmethosulfat, Methyl-n-propyldiallylammoniumchlorid, Dimethyldiallylammoniumhydrogensulfat, Dimethyldiallylammoniumdihydrogenphosphat, Di-n-butyl-diallylammoniumbromid, Diallylpiperidiniumbromid, Diallylpyrrolidiniumchlorid und Diallylmorpholiniumbromid.

Geeignet sind auch N-Vinylpyrrolidone, wie N-Vinylpyrrolidon. Als wasserlösliches Monomer kommt auch N-Vinylformamid in Betracht. Es wird entweder allein oder in Mischung mit anderen ethylenisch ungesättigten Monomeren copolymerisiert, z.B. mit N-Vinylpyrrolidon, Acrylamid, Methacrylamid, Vinylacetat, N-Vinylimidazol, N-Vinylimidazolin und/oder Dimethylaminoethylacrylat.

Außerdem kommen als wasserlösliche Monomere N-Vinylimidazolium-Verbindungen in Betracht, die beispielsweise mit Hilfe folgender Formel charakterisiert werden können: 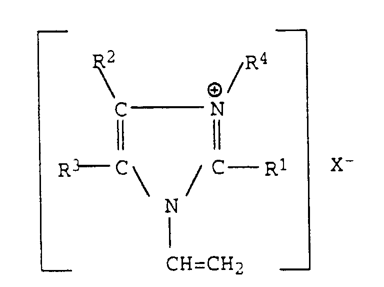
in der R¹, R² und R³ = H, CH₃ und R¹ außerdem noch C₂H₅, C₃H₇ und C₄H₉ und R⁴ = H, C₁- bis C₆-Alkyl-, Benzyl- und 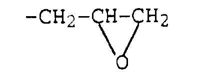
und X⁻ ein Anion, wie Cl⁻, Br⁻, I⁻, Methosulfat, Ethosulfat, Acetat, Sulfat, Hydrogensulfat und Dihydrogenphosphat sein kann. Vorzugsweise verwendet man aus dieser Verbindungsklasse das unsubstituierte N-Vinylimidazol in Salzform. Weitere geeignete wasserlösliche Monomere sind N-Vinylimidazoline, die beispielsweise mit Hilfe folgender allgemeiner Formel charakterisiert werden können: 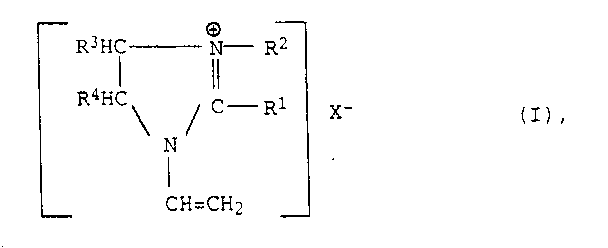 in der
R¹ = H, C₁- bis C₁₈-Alkyl, 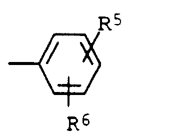
R⁵, R⁶ = H, C₁- bis C₄-Alkyl, Cl,
R² = H, C₁- bis C₁₈-Alkyl 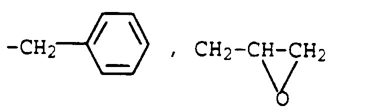
R³, R⁴ = H, C₁- bis C₄-Alkyl, und
X⁻ ein Säurerest bedeutet.

Vorzugsweise setzt man bei der Polymerisation aus dieser Gruppe von Verbindungen 1-Vinyl-2-imidazolin-Salze der Formel II ein 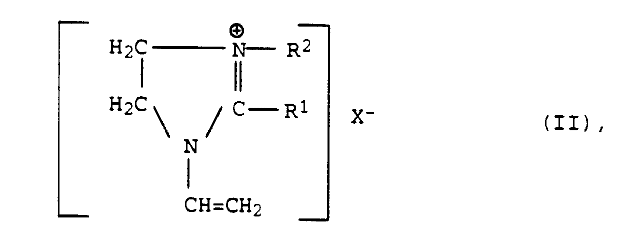 in der
R¹ = H, CH₃, C₂H₅, n- und i-C₃H₇, C₆H₅ und
X⁻ ein Säurerest ist. X⁻ steht vorzugsweise für Cl⁻, Br⁻, SO₄²⁻, HSO₄⊖, H₂PO₄⊖, CH₃O-SO₃⁻, C₂H₅-O-SO₃⁻, R¹-COO⁻ und R² = H, C₁- bis C₄-Alkyl und Aryl.

Der Substituent X⁻ in den Formeln I und II kann prinzipiell jeder beliebige Säurerest einer anorganischen oder einer organischen Säure sein. Die Monomeren der Formel I werden erhalten, indem man die freie Base, d.h. 1-Vinyl-2-imidazoline, mit der äquivalenten Menge einer Säure neutralisiert. Die Vinylimidazoline können auch beispielsweise mit Trichloressigsäure, Benzolsulfonsäure oder Toluolsulfonsäure neutralisiert werden. Außer Salzen von 1-Vinyl-2-imidazolinen kommen auch quaternisierte 1-Vinyl-2-imidazoline in Betracht. Sie werden hergestellt, indem man 1-Vinyl-2-imidazoline, die gegebenenfalls in 2-, 4- und 5-Stellung substituiert sein können, mit bekannten Quaternisierungsmitteln umsetzt. Als Quaternisierungsmittel kommen beispielsweise C₁- bis C₁₈-Alkylchloride oder -bromide, Benzylchlorid, Benzylbromid, Epichlorhydrin, Dimethylsulfat und Diethylsulfat in Betracht. Als Quaternisierungsmittel verwendet man vorzugsweise Epichlorhydrin, 3enzylchlorid, Dimethylsulfat und Methylchlorid.

Vorzugsweise kommen als wasserlösliche ethylenisch ungesättigte Monomere Acrylsäure, Methacrylsäure, Acrylamid, Methacrylamid, N-Vinylpyrrolidon, 2-Acrylamido-2-methylpropansulfonsäure, N-Vinylimidazol, N-Vinylformamid, Hydroxyethylacrylat, Hydroxypropylacrylat, N-Methylolacrylamid oder deren Gemische in Betracht. Die Monomeren können entweder allein zu Homopolymerisaten oder auch in Mischung miteinander zu Copolymerisaten polymerisiert werden. Von besonderem Interesse sind beispielsweise Copolymerisate aus Acrylamid und Acrylsäure, Copolymerisate aus Acrylamid und Methacrylsäure, Copolymerisate aus Methacrylamid und Acrylsäure, Copolymerisate aus Methacrylamid und Methacrylsäure, Copolymerisate aus Acrylamid, Acrylsäure und Acrylamid-2-methylpropansulfonsäure, Copolymerisate aus Acrylamid und Dimethylaminoethlacrylat, Copolymerisate aus Acrylamid und Diethylaminoethylmethacrylat und Copolymerisate aus Methacrylamid und Dimethylaminoethylacrylat. Die Carbonsäuren und die anderen ethylenisch ungesättigten Säuren, wie Vinylsulfonsäure und Acrylamidomethylpropansulfonsäure, können entweder in Form der freien Säure, in partiell neutralisierter oder auch in vollständig neutralisierter Form bei der Polymerisation eingesetzt werden. Als Basen zur Neutralisation dieser Monomeren verwendet man beispielsweise Natronlauge, Kalilauge, Ammoniak, Amine, wie Triethylamin, Butylamin, Triethylamin, Morpholin und Ethanolamin.

Die basischen Acrylate und Methacrylate werden vorzugsweise als Salz oder in quaternisierter Form bei der Homo- oder Copolymerisation eingesetzt. Die Neutralisation der basischen Acrylate und -methacrylate erfolgt beispielsweise mit Hilfe von Salzsäure, Bromwasserstoffsäure, Schwefelsäure, Phosphorsäure und Carbonsäuren, wie Ameisensäure, Essigsäure und Propionsäure. Außerdem werden die basischen Acrylate und -methacrylate in quaternisierter Form eingesetzt. Die Quaternisierungsprodukte werden erhalten, indem man diese Verbindungen mit üblichen Quaternisierungsmitteln, wie Methylchlorid, Ethylchlorid, Benzylchlorid, laurylchlorid, Dimethylsulfat, Diethylsulfat oder Epichlorhydrin quaternisiert.

Die Polymerisation der wasserlöslichen Monomeren erfolgt in Gegenwart von mindestens 1000 ppm, bezogen auf die insgesamt eingesetzten Monomeren, an Vernetzern. Die Vernetzer enthalten mindestens zwei nicht konjugierte, ethylenisch ungesättigte Doppelbindungen. Geeignete Vernetzer sind beispielsweise N,N'-Methylenbisacrylamid, Polyethylenglykoldiacrylate und Polyethylenglykoldimethacrylate, die sich jeweils von Polyethylenglykolen eines Molekulargewichts von 126 bis 8.500 ableiten, Trimethylolpropantriacrylat, Trimethylolpropantrimethacrylat, Ethylenglykoldiacry lat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropandiallylether, Polyethylenglykoldivinylether, Butandioldivinylether, Pentaerythrittriallylether und/oder Divinylethylenharnstoff und/oder Triallylmonoalkylammoniumsalze, wie z.B. Triallylmethylammoniumchlorid. Vorzugsweise setzt man wasserlösliche Vernetzer ein, z.B. N,N'-Methylen-bisacrylamid, Polyethylenglykoldiacrylate, Polyethylenglykoldimethacrylate, Pentaerythrittriallylether und/oder Divinylharnstoff. Die Vernetzer werden in einer Menge von mindestens 1000 ppm, vorzugsweise 0,20 % bis 10 Gew.-%, bezogen auf die bei der Polymerisation insgesamt eingesetzten Monomeren, verwendet. Die besonders bevorzugt zum Einsatz gelangenden Mengen an Vernetzern betragen 0,2 bis 0,5 Gew.-%, bezogen auf die Monomeren.

Die Polymerisation der wasserlöslichen Monomeren erfolgt in Gegenwart von mindestens 1000 ppm mindestens eines Vernetzers und von 1 bis 10 Gew.-% mindestens eines Reglers, wobei sich die angegebenen Mengen jeweils auf die eingesetzten Monomeren beziehen. Als Regler kann man die üblicherweise hierfür in Betracht kommenden Verbindungen einsetzen, die bei Polymerisationen das Molgewicht der Polymerisate begrenzen, z.B. Alkohole, Salze des Hydrazins und des Hydroxylamins, Ameisensäure, Alkali- und Ammoniumsalze der Ameisensäure und organische Verbindungen, die Schwefel in gebundener Form enthalten wie, jeweils organische, Sulfide, Disulfide, Polysulfide, Sulfoxide, Sulfone und Mercaptoverbindungen. Folgende Polymerisationsregler werden beispielhaft genannt: Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid und Dimethylsulfoxid. Bevorzugt als Polymerisationsregler eingesetzte Verbindungen sind Mercaptoverbindungen, Dialkylsulfide, Dialkyldisulfide und/oder Diarylsulfide. Beispiele für diese Verbindungen sind Ethylthioglykolat, Cystein, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan. Besonders bevorzugt eingesetzte Polymerisationsregler sind Isopropanol, Ameisensäure und ihre Alkali- und Ammoniumsalze, Thioglykolsäure und ihre Alkali- und Ammoniumsalze sowie alle Regler, die eine ähnlich hohe Übertragungskonstante wie Thioglykolsäure haben. Die Polymerisationsregler werden in Mengen von 1 bis 10 Gew.-%, bezogen auf die bei der Polymerisation eingesetzten Monomeren, verwendet. Bei der Polymerisation können selbstverständlich auch Mischungen der Polymerisationsregler angewendet werden.

Um die Monomeren zu polymerisieren, löst man sie zunächst in Wasser. Die Konzentration der Monomeren in der wäßrigen Lösung beträgt 20 bis 80, vorzugsweise 30 bis 60 Gew.-%. Die wäßrige Lösung wird dann unter Bildung einer Wasser-in-Öl-Emulsion in einer inerten hydrophoben Flüssigkeit (Ölphase) in Gegenwart mindestens eines Wasser-in-Öl-Emulgators emulgiert. Als inerte hydrophobe Flüssigkeiten können praktisch alle mit Wasser nicht mischbaren Flüssigkeiten verwendet werden, die nicht in die Polymerisation eingreifen. Vorzugsweise verwendet man hierfür aliphatische und aromatische Kohlenwasserstoffe oder Mischungen aus aliphatischen und aromatischen Kohlenwasserstoffen. Geeignete aliphatische Kohlenwasserstoffe sind beispielsweise Pentan, Hexan, Heptan, Octan, Nonan, Decan, Cyclohexan, Decalin, Methylcyclohexan, Isooctan und Ethylcyclohexan. Aromatische Kohlenwasserstoffe, die als hydrophobe Flüssigkeit bei der umgekehrten Suspensionspolymerisation verwendet werden, sind beispielsweise Benzol, Toluol, Xylol und Isopropylbenzol. Daneben ist es selbstverständlich auch möglich, halogenierte Kohlenwasserstoffe, wie Tetrachlorethan, Hexachlorethan, Trichlorethan und Chlorbenzol zu verwenden. Vorzugsweise verwendet man Cyclohexan oder Kohlenwasserstoffe eines Siedebereichs von 60 bis 170°C. Der Anteil der Ölphase am Aufbau der Wasser-in-Öl-Polymeremulsion beträgt 15 bis 70, vorzugsweise 20 bis 60 Gew.-%.

Um die wäßrige Monomerlösung in der Ölphase zu dispergieren, verwendet man die dafür bekannten Wasser-in-Öl-Emulgatoren. Hierbei handelt es sich beispielsweise um Sorbitanester, wie Sorbitanmonostearat, Sorbitanmonooleat, Sorbitanpalmitat und Sorbitanlaurat sowie um Glycerinester, deren Säurekomponente sich von C₁₄- bis C₂₀-Carbonsäuren ableitet. Weitere geeignete Emulgatoren sind die aus der DE-PS 25 57 324 bekannten Wasser-in-Öl-Emulgatoren, die erhältlich sind durch Umsetzung von
A) C₁₀-C₂₂-Fettalkoholen mit Epichlorhydrin im Molverhältnis 1:0,5 bis 1:1,5 zu Glycidylethern,
B) Reaktion der Glycidylether mit (1) gesättigten, 2 bis 6 OH-Gruppen enthaltenden C₂-C₆-Alkoholen oder (2) deren Monoether mit C₁₀-C₂₂-Fettalkoholen, im Molverhältnis Glycidylether zu (1) oder (2) von 1:0,5 bis 1:6 in Gegenwart von Säuren oder Basen und
C) Alkoxylierung der Reaktionsprodukte gemäß (B) mit mindestens einem C₂-C₄-Alkylenoxid im Molverhältnis 1:1 bis 1:6.

Weitere geeignete Emulgatoren sind aus mindestens einem hydrophilen und mindestens einem hydrophoben Block aufgebaut, wobei die Blöcke jeweils Molmassen von mehr als 500 bis 100.000, vorzugsweise 550 bis 50.000 und ganz besonders bevorzugt 600 bis 20.000 haben. Die Emulgatoren können kammartig oder linear aufgebaut sein. Lineare Blockcopolymerisate des Typs AB oder des Typs ABA, wobei A einen hydrophoben und B einen hydrophilen Polymerblock darstellt, sind bekannt, vgl. EP-A-0 000 424 und EP-A-0 623 630. Vorzugsweise sind die zu verwendenden Emulgatoren in dem benutzten, mit Wasser nicht mischbaren Lösungsmittel löslich.

Die hydrophilen Blöcke sind für sich genommen zu mehr als 1 %, vorzugsweise 5 Gew.-% in Wasser bei 25°C löslich. Beispiele sind Blöcke, die aus Ethylenoxid, Propylenoxid- oder Butylenoxid-Einheiten, gegebenenfalls in Mischung untereinander, aufgebaut sind. Die Hydroxylgruppen der Alkylenoxidblöcke können durch Sulfat- oder Phosphatestergruppen zusätzlich modifiziert werden. Geeignete weitere Blöcke leiten sich ab von Polytetrahydrofuran, Poly(1,3-dioxolan), Poly (2-methyl-2-oxazolin), Polyethylenimin, Polyvinylalkohol, Polyvinylamin, Polyvinylpyrrolidon, Poly(meth)acrylsäure, Polyamidoaminen, Gelatine, Cellulosederivaten oder Stärke. Besonders bevorzugt werden Blöcke auf Basis von Ethylenoxid- und/oder Propylenoxid-Einheiten.

Die hydrophoben Teile der Emulgatoren bestehen beispielsweise aus Blöcken von Polystyrol, Polyalkyl(meth)acrylaten, Polysiloxanen, Poly(hydroxyalkansäuren) wie z.B. Polykondensaten aus 2-Hydroxypropansaure, 2-Hydroxybutansäure, 2-Hydroxyisobutansäure, 2-Hydroxyheptansäure, 10-Hydroxydecansäure, 12-Hydroxydodecansäure, 12-Hydroxystearinsäure, 16-Hydroxyhexadecansäure, 2-Hydroxystearinsäure, 2-Hydroxyvaleriansaure oder die entsprechenden aus Lactonen erhaltenen Kondensate, Kondensate aus Diolen und Dicarbonsäuren wie Polyethylenadipat, Polylactame wie Polycaprolactam, Polyisobutylen oder Polyurethane. Bevorzugt werden Blöcke aus Polystyrol, Polymethylmethacrylat, Polybutylmethacrylat, Polyhydroxyalkansäuren mit mehr als 10 C-Atomen in der Alkaneinheit, Polydimethylsiloxanen oder Polyisobutylenen. Ganz besonders bevorzugt werden Blöcke aus Polystyrol, Polyhydroxyfettsäuren wie Poly(12-hydroxystearinsäure) oder Polydimethylsiloxanen.

Von diesen Verbindungen werden als Emulgator vorzugsweise solche Blockcopolymerisate eingesetzt, wobei
- A ein hydrophober Polymerblock aus der Gruppe Polystyrol, Poly(hydroxycarbonsäuren), Polydimethylsiloxane oder Polyisobutylene und
- B ein hydrophiler Polymerblock aus der Gruppe der C₂- bis C₄-Polyalkylenglykole
ist.

Die in Betracht kommenden Wasser-in-Öl-Emulgatoren haben einen HLB-Wert von höchstens 8. Unter HLB-Wert versteht man die hydrophile-lipophile Balance des Emulgators, vgl. W.C. Griffin, J. Soc. Cosmet. Chem. Band 1, 311 (1949). Die Wasser-in-Öl-Emulgatoren werden, bezogen auf die eingesetzten Monomeren, in einer Menge von 2 bis 20, vorzugsweise 5 bis 15 Gew.-% eingesetzt. Vorzugsweise werden diejenigen Wasser-in-Öl-Emulgatoren eingesetzt, die in der genannten DE-PS 25 57 324 beschrieben sind.

Als geeignete Radikale bildende Polymerisationsinitiatoren können sämtliche üblicherweise eingesetzten Polymerisationsinitiatoren verwendet werden. Bevorzugt sind wasserlösliche Initiatoren, wie Alkali- oder Ammoniumperoxidisulfate, Wasserstoffperoxid, Diacetylperoxidicarbonat, Dicyclohexylperoxidicarbonat, tert.-Butylperpivalat, Dilauroylperoxid, Dibenzoylperoxid, tert.-Butylper-2-ethylhexanoat, tert.-Butylpermaleinat, Bis(tert.-butylperoxid)-cyclohexan, tert.-Butylperacetat, Dicumylperoxid, Di-tert.-amylperoxid, Di-tert.-butylperoxid, Cumylhydroperoxid, tert.-Butylhydroperoxid und p-Methanhydroperoxid sowie Azoinitiatoren, wie 2,2'-Azobis (2-methyl-N-phenylpropionamidin)dihydrochlorid, 2,2'-Azobis (2-methylpropionamidin)dihydrochlorid, 2,2'-Azobis(2,4-dimethylvaleronitril), 2,2'-Azobis-(isobutyronitril), 2,2'-Azobis (2-amidinopropan)dihydrochlorid und 2,2'-Azobis-[2-(2-imidazolin-2-yl)propan]-dihydrochlorid. Bevorzugte Initiatoren sind Alkali- und Ammoniumpersulfate, tert.-Butylperpivalat, tert.-Butylper-2-ethylhexanoat, 2-2'-Azobis-(2,4-dimethylvaleronitril), 2,2'-Azobis (2-amidinopropan)dihydrochlorid, Azobis-(isobutyronitril) und 2,2'-Azobis[2-(2-imidozolon-2-yl)propan]dihydrochlorid. Man kann entweder einen einzigen Initiator oder auch Mischungen mehrerer Initiatoren verwenden. Die Auswahl der Initiatoren richtet sich in erster Linie nach der Temperatur, bei der die Polymerisation durchgeführt wird. Man kann auch zusätzliche Salze von Schwermetallen, z.B. Kupfer-, Kobalt-, Mangan-, Eisen-, Nickel- und Chromsalze und/oder organische Verbindungen, wie Benzoin, Dimethylanilin, Ascorbinsäure sowie Reduktionsmittel, wie beispielsweise Alkalidisulfit oder Formaldehydnatriumsulfoxylat zusammen mit mindestens einem der oben angegebenen Radikale bildenden Polymerisationsinitiatoren einsetzen. Solche Mischungen von Initiatoren ermöglichen das Polymerisieren bei niedrigeren Temperaturen. Die reduzierende Komponente von sogenannten Redox-Initiatoren kann beispielsweise von Natriumsulfit, Natriumbisulfit, Natriumformaldehydsulfoxylat oder Hydrazin gebildet werden. Bezogen auf die bei der Polymerisation eingesetzten Monomeren benötigt man 100 bis 10.000, vorzugsweise 100 bis 2000 ppm eines Polymerisationsinitiators oder einer Mischung mehrerer Polymerisationsinitiatoren. Die angegebenen Initiatormengen entsprechen etwa 0,002 bis 0,3 Mol.% Initiator, bezogen auf die eingesetzten Monomeren.

In einer bevorzugten Ausführungsform der Erfindung wird die Polymerisation der wasserlöslichen Monomeren zusätzlich in Gegenwart mindestens eines Öl-in-Wasser-Emulgators durchgeführt. Der Einsatz dieser Gruppe von Emulgatoren ermöglicht die Herstellung besonders feinteiliger und sedimentationsstabiler Wasser-in-Öl-Polymeremulsionen. Geeignete Öl-in-Wasser-Emulgatoren sind beispielsweise sämtliche Netzmittel, die einen HLB-Wert von mindestens 10 haben. Bei dieser Gruppe von Emulgatoren handelt es sich im wesentlichen um hydrophile wasserlösliche Verbindungen, wie ethoxylierte Alkylphenole oder ethoxylierte Fettalkohole. Produkte dieser Art werden beispielsweise dadurch erhalten, daß man C₈- bis C₁₂-Alkylphenole oder C₈-C₂₂-Fettalkohole mit Ethylenoxid umsetzt. Vorzugsweise ethoxyliert man C₁₂-C₁₈-Fettalkohole. Das Molverhältnis von Alkylphenol bzw. Fettalkohol zu Ethylenoxid beträgt dabei im allgemeinen 1:5 bis 1:20. Weitere geeignete Emulgatoren sind beispielsweise alkoxylierte Fettamine. Sofern die Emulgatoren eine HLB-Wert von 10 oder darüber bei der Polymerisation eingesetzt werden, so verwendet man sie in Mengen von 1 bis 20, vorzugsweise 2 bis 15 Gew.-%, bezogen auf die zu polymerisierenden Monomeren.

Die Polymerisation der Monomeren erfolgt in der wäßrigen Phase einer Wasser-in-Öl-Emulsion in Gegenwart von Wasser-in-Öl-Emulgatoren und gegebenenfalls Schutzkolloiden, die üblicherweise bei der umgekehrten Suspensionspolymerisation eingesetzt werden und ggf. Öl-in-Wasser-Emulgatoren sowie in Gegenwart von Radikale bildenden Polymerisationsinitiatoren.

Die Wasser-in-Öl-Polymeremulsionen werden in Gegenwart von agglomerierend wirkenden Polyalkylenglykolen azeotrop entwässert.

Die Entwässerung der Wasser-in-Öl-Polymeremulsionen erfolgt dabei unter den Bedingungen, die in der WO-A-92/13912 angegeben sind. Nach der azeotropen Entwässerung liegen Agglomerationen von Primärteilchen vor, die gemäß Siebanalyse einen mittlere Teilchendurchmesser von ca. 20 bis 5000, vorzugsweise 50 bis 2500 µm haben. Die agglomerierten Polymerteilchen enthalten Primärteilchen mit einem mittleren Teilchendurchmesser von 0,1 bis 15 µm. Das in den Wasser-in-Öl-Polymeremulsionen enthaltene Wasser wird durch azeotrope Destillation mindestens zu 80, vorzugsweise bis zu 95 bis 99 % entfernt. Geringe Mengen an Wasser, die in den Polymerisaten verbleiben, stören nicht. Beim Eintragen durch azeotrope Destillation getrockneten agglomerierten Teilchen in Wasser zerfallen sie in die Primärteilchen.

Die als Agglomerationshilfsmittel in Betracht kommenden Polyalkylenglykole sind beispielsweise dadurch erhältlich, daß man die in Betracht kommenden Alkylenoxide, es sind dies Ethylenoxid, Propylenoxid, Butylenoxid-1,2, Isobutylenoxid und Tetrahydrofuran an Alkohole, Phenole, Amine oder Carbonsäuren anlagert. Die genannten Alkylenoxide und Tetrahydrofuran können entweder allein oder in Mischung polymerisiert werden. Sofern Mischungen eingesetzt werden, erhält man polymere Verbindungen, in denen die Alkylenoxid-Einheiten statistisch verteilt sind. Man kann jedoch auch die Alkylenoxide in üblicher Weise zu Blockcopolymerisaten abreagieren lassen. Homopolymerisate des Ethylenoxids werden beispielsweise erhalten, indem man Ethylenoxid an Ethylenglykol anlagert. Zur Herstellung von Homopolymerisaten des Propylenoxids lagert man an Propylenglykol-1,2, Propylenglykol-1,3 oder an Mischungen der genannten Isomeren Propylenoxid an. Die Herstellung der Homopolymerisate der anderen Alkylenoxide erfolgt in entsprechender Weise.

Blockcopolymerisate werden beispielsweise dadurch hergestellt, daß man zunächst Ethylenoxid an Ethylenglykol anlagert und abreagieren läßt und danach Propylenoxid unter den üblichen Bedingungen, d.h. durch Katalyse mit Alkalihydroxiden oder Calciumoxid, addiert. Hier gibt es viele Möglichkeiten, um die Reihenfolge der Blöcke von Alkylenoxid-Einheiten zu variieren. Beispielsweise kann sich an einen Ethylenoxid-Block ein Propylenoxid-Block und dann ein Ethylenoxid-Block anschließen. Ebenso sind Polyalkylenglykole als Agglomerationshilfsmittel einsetzbar, die einen Ethylenoxid-Block, einen Propylenoxid-Block und einen Butylenoxid-Block aufweisen oder Polyalkylenglykole, bei denen auf einen Propylenoxid-Block ein Ethylenoxid-Block folgt oder solche Polyalkylenoxide, bei denen auf einen Butylenoxid-Block ein Propylenoxid-Block und gegebenenfalls ein Ethylenoxid-Block folgt.

Die Endgruppen der so entstehenden Polyalkylenglykole können einseitig oder auch beidseitig verschlossen sein. Einseitig verschlossene Polyalkylenglykole erhält man z.B. dadurch, daß man Alkylenoxide an Alkohole, Phenole, Amine oder Carbonsäuren anlagert. Geeignete Alkohole sind beispielsweise einwertige C₁- bis C₂₂-Alkohole, z.B. Methanol, Ethanol, n-Propanol, Isopropanol, n-Butanol, Isobutanol, n-Octanol, Isooctanol und Stearylalkohol. Als Alkohole können auch mehrwertige Alkohole eingesetzt werden, z.B. wie bereits oben erwähnt, Ethylenglykole oder Propylenglykole sowie Glycerin, Pentaerythrit und Hexandiol-1,6. Die Alkylenoxide können auch an Phenol, und substituierte Phenole, wie C₁- bis C₁₈-Alkylphenole addiert werden. Ebenso eignen sich Amine als Endgruppenverschluß, z.B. C₁- bis C₁₈-Alkyl- oder Dialkylamine sowie Diamine, vorzugsweise Ethylendiamin. Von besonderem Interesse sind hierbei handelsübliche Produkte, die beispielsweise durch nacheinander erfolgende Anlagerung von Ethylenoxid und Propylenoxid an Ethylendiamin erhältlich sind. Auch Thioalkohole, wie Mercaptoethanol, Mercaptopropanole und Mercaptobutanole, können alkoxyliert werden. Die endständigen OH-Gruppen der Polyalkylenglykole können auch beispielsweise durch Aminogruppen ersetzt sein. Ebenso eigenen sich solche Polyalkylenglykole als Agglomerationshilfsmittel, deren endständige OH-Gruppen verethert oder verestert sind.

Die in Betracht kommenden Polyalkylenglykole enthalten mindestens 2 Alkylenoxid-Einheiten einpolymerisiert. Geeignete Agglomerationshilfsmittel sind beispielsweise Polyethylenglykole, Polypropylenglykole, Blockcopolymerisate aus Ethylenoxid- und Propylenoxidblöcken der Struktur EO-PO, PO-EO-PO oder EO-PO-EO, ein- oder beidseitig mit C₁- bis C₄-Alkoholen veretherte Polyethylenglykole und solche Verbindungen, die durch Anlagerung von zunächst Ethylenoxid und dann Propylenoxid oder in umgekehrter Reihenfolge an Ethylendiamin erhältlich sind. Geeignete agglomerierend wirkende Polyalkylenglykole sind z.B. Diethylenglykol, Triethylenglykol, Tetraethylenglykol, Pentamethylenglykol, Hexaethylenglykol, Heptaethylenglykol, Octaethylenglykol, Diethylenglykoldimethylether, Diethylenglykolmonomethylether, Diethylenglkyoldiethylether, Diethylenglykolmonoethylester, Triethylglykolmono- und -dimethylether, Triethylenglykolmono- und -diethylether, Dialkylenglykoldibutylether, Diethylenglykolmonobutylether, Diethylenglykolmonopropylether, Diethylenglykoldipropylether, EO-PO-Blockcopolymerisate mit mittleren Molekulargewichten von 120 bis 2 Millionen, PO-EO-PO-Blockcopolymerisate mit mittleren Molekulargewichten von 178 bis 2 Millionen und EO-PO-EO-Blockcopolymerisate mit mittleren Molekulargewichten von 134 bis 2 Millionen, Dipropylenglykoldiacetat, Diethylenglykoldiacetat, Dipropylenglykolmonoacetat, Diethylenglykolmonoacetat, Dipropylenglykoldimethylether und Dipropylenglykolmonomethylether. Die angegebenen Molekulargewichte beziehen sich auf das Zahlenmittel. Die Agglomerationshilfsmittel werden vorzugsweise in Mengen von 5 bis 20 Gew.-%, bezogen auf das in der Wasser-in-Öl-Emulsion vorhandene Polymere, eingesetzt.

Nach der azeotropen Entwässerung in Gegenwart der Polyalkylenglykole liegen agglomerierte Polymerteilchen vor, die leicht isoliert werden können, z.B. durch Filtrieren, Abdekantieren des Kohlennwasserstofföls oder Zentrifugieren. Das den agglomerierten Teilchen noch anhaftende Kohlenwasserstofföl kann leicht aus den agglomerierten Polymerteilchen entfernt werden, z.B. durch Trocknen in einem Trockenschrank, vorzugsweise Trocknen bei höheren Temperaturen unter vermindertem Druck.

Die pulverförmigen agglomerierten Polymerisatteilchen werden als Verdickungsmittel zur Erhöhung der Viskosität wäßriger Systeme verwendet. Sie eignen sich beispielsweise als Verdickungsmittel für Druckpasten zum Bedrucken von Textilien oder auch als Verdikkungsmittel für wäßrige Polymerdispersionen, die beispielsweise als Bindemittel für Papierstreichmassen oder als Bindemittel in Anstrichfarben Verwendung finden. Besonders bevorzugt ist der Einsatz der agglomerierten Polymerteilchen als Verdickungsmittel in solchen Druckpasten, die als Farbstoff mindestens einen Reaktivfarbstoff und/oder einen Dispersionsfarbstoff enthalten. Diejenigen Polymerisate, die ein Monomer mit einer Säuregruppe einpolymerisiert enthalten, z.B. Acrylsäure, Methacrylsäure und 2-Acrylamido-2-methylpropansulfonsäure werden vorzugsweise in Form der Natrium- oder Kalisalze eingesetzt, bzw. neutralisiert man die Säuregruppen enthaltenden Polymerisate vorzugsweise mit Natronlauge oder Kalilauge. Die Natrium- und Kalisalze der Polymerisate können gegenüber den entsprechenden Ammoniumsalzen besonders leicht aus bedruckten Textilien ausgewaschen werden.

Die Druckpasten haben den üblichen Aufbau. Sie enthalten beispielsweise auf 1000 Gew.-Teile der fertigen Druckpaste 500 bis 989 Gew.-Teile Wasser, 1 bis 200 Gew.-Teile mindestens eines Reaktivfarbstoffs und/oder mindestens eines Dispersionsfarbstoffs und 10 bis 100 Gew.-Teile eines erfindungsgemäß zu verwendenden Verdickungsmittels. Reaktivfarbstoffe und Dispersionsfarbstoffe sind im Handel erhältlich. Unter Dispersionsfarbstoffen versteht man in Wasser schwerlösliche synthetische Farbstoffe, die in Form fein verteilter, mit Dispergiermitteln stabilisierter Suspensionen in den Handel kommen. Beim Druckprozeß dringen die Farbstoffpartikel durch Diffusion in die Faser ein und bilden dort eine feste Lösung.

Reaktivfarbstoffe enthalten neben einem Chromophor noch eine reaktive Komponente (Anker). Beim Druckprozeß erfolgt die Bindung des Farbstoffs durch chemische Reaktion mit funktionellen Gruppen der Faser. Reaktivfarbstoffe werden beispielsweise detailliert im Colour-Index, 1982, 3^{rd} Edition, Vol. 5, published by the Society of Dyers and Colourists, H. Charlesworth & Co. Ltd., Huddersfield beschrieben. Für das Bedrucken und Färben von textilen Materialien aus Cellulose werden die üblicherweise in Betracht kommenden Mengen an Farbstoffen sowie die gegebenenfalls mitzuverwendenden Hilfsmittel in den üblichen Mengen eingesetzt. Die Reaktivfarbstoffe können verschiedene reaktive Gruppen, die oben als Anker bezeichnet werden, aufweisen, z.B. Vinylsulfon-, Monochlortriazin- oder β-Sulfatoethylsulfonylgruppen. Die Farbstoffe können verschiedenen Farbstoffklassen angehören, z.B. Azofarbstoffen, Metallkonplex-Azofarbstoffen, Anthrachinonfarbstoffen, Phthalocyaninfarbstoffen, Phenacen- und Azomethinfarbstoffen.

### Beispiele

### Herstellung der Wasser-in-Öl-Polymeremulsionen

Wie in der DE-C-36 41 700 beschrieben, werden in einem 2 l fassenden Polymerisationsbehälter, der mit Ankerrührer, Thermometer, Stickstoffeinlaß und Stickstoffauslaß versehen ist, die nachstehend jeweils beschriebenen Monomeremulsionen vorgelegt. Die polymerisierbare Mischung wird dann unter Zugabe der halben Startermenge 30 min bei Raumtemperatur unter Stickstoffatmosphäre bei einer Rührgeschwindigkeit von 200 Upm emulgiert. Das Reaktionsgemisch wird dann auf eine Temperatur im Bereich von 55 bis 70°C erwärmt und in diesem Temperaturbereich 1,5 h polymerisiert. Dann setzt man die restliche Menge des Starters zu und erhitzt das Reaktionsgemisch noch 2 h bei 65°C unter Rühren.

Zur Herstellung der Monomeremulsion wird zunächst Acrylsäure vorgelegt und durch Zugabe von wäßriger Natronlauge bis auf einen pH-Wert von 7 neutralisiert. Anschließend fügt man die anderen Komponenten und soviel wäßrige Natronlauge zu, daß der pH-Wert 8 beträgt. Man gibt dann soviel Wasser zu, daß die Gesamtmenge des Reaktionsgemisches 1000 g beträgt.

Zusammensetzung der Monomeremulsionen bei der Herstellung der W/ O-Polymeremulsionen

### Polymerisat 1

308 g Cyclohexan
17,6 g eines Wasser-in-Öl-Emulgators, der erhältlich ist durch Umsetzung von
   A) Oleylalkohol mit Epichlorhydrin im Molverhältnis 1:1 zu Oleylglycidylether,
   B) Reaktion des Oleylglycidylethers mit Glycerin im Molverhältnis 1:1 in Gegenwart von BF₃-Phosphorsäure bei einer Temperatur von 80°C und Entfernen des Katalysators mit Hilfe eines basischen Ionenaustauschers und
   C) Ethoxylierung des Reaktionsprodukts gemäß (B) mit 2 mol Ethylenoxid,
2,6 g eines Tensids, das durch Umsetzung eines C₁₃/C₁₅-Oxoalkohols mit 6 mol Ethylenoxid und 4 mol Propylenoxid erhältlich ist,
153,8 g Acrylsäure
13,2 g Acrylamid
13,2 g N-Vinylpyrrolidon
3,6 g Thioglykolsäure
0,08g Pentanatriumsalz der Diethylentriaminpentaessigsäure
0,36 g Methylenbisacrylamid

### Starter:

0,092 g 2,2'-Azobis (2-amidinopropan)dihydrochlorid

### Polymerisat 2

Die Zusammensetzung unterscheidet sich von der Zusammensetzung der Monomeremulsion, die für das Polymerisat 1 angegeben ist nur dadurch, daß jetzt kein N-Vinylpyrrolidon eingesetzt wird.

### Polymerisat 3

Man verfährt wie bei der Herstellung des Polymerisats 1, verwendet jedoch als Monomere Acrylsäure und N-Vinylpyrrolidon und führt die Neutralisation mit Kalilauge durch.

### Polymerisat 4

Man verfährt wie bei Polymerisat 1 angegeben, ersetzt jedoch die dort verwendete Menge von 3,6 g Thioglykolsäure durch 5,4 g Ameisensäure.

### Vergleich 1

Hierbei handelt es sich um das in der WO-A-92/13812 angegebene W/ O-Polymerisat 1, das 92,1 % Acrylsäure und 7,9 % Acrylamid enthält.

Die oben beschriebenen Polymerisate 1 bis 4 und das Polymerisat gemäß Vergleich 1 werden jeweils mit 10 g eines als Agglomerationshilfsmittels wirkenden Polyethylenglykols der mittleren Molmasse von 300 versetzt und - wie in der WO-A-92/13912 beschrieben - azeotrop entwässert. Nach dem Entwässern werden die Polymersuspensionen filtriert und die agglomerierten Polymerisate im Vakuum-Trockenschrank bei 50°C getrocknet. Man erhält dann die agglomerierten Polymerisate 1 bis 4 sowie das agglomerierte Polymer gemäß Vergleichsbeispiel 1.

### Anwendungstechnische Beispiele

### Beispiel 1

410 g des agglomerierten Polymerisats 1 werden in 7914 g Wasser mit 2,685 mmol CaO/lWasser (15° deutscher Härte) unter Rühren eingestreut. Das agglomerierte Polymerisat läßt sich darin gut verteilen und klumpt nicht zusammen. Nach 3 minütigem Rühren mit einem Schnellrührer erhält man eine homogene Paste. Anschließend füllt man unter Rühren nacheinander
1200 g Harnstoff
250 g Soda
100 g m-Nitrobenzolsulfonsäuren-Natriumsalz
100 g des pulverförmigen blauen Reaktivfarbstoffs der CI-Nr. 61205 zu
und homogenisiert die Mischung 3 min bei 10 000 Upm.

Man erhält eine Druckpaste mit einer Viskosität von 4000 mPas (40 Poise). Durch die Zugabe des Reaktivfarbstoffs trat ein Viskositätsabfall von 3200 mPa.s (32 Poise) ein.

Die erhaltene Druckpaste wurde dann mit einer Rotationsfilmdruckmaschine auf ein Baumwollgewebe gedruckt. Das bedruckte Gewebe wurde 2 min bei einer Temperatur von 110°C getrocknet und anschließend 10 min bei 102°C im Sattdampf fixiert. Die Ware wird anschließend nacheinander mit Wasser einer Temperatur von 20°C und Wasser mit einer Temperatur von 60°C gespült und mit einer Waschflotte, die 2 g/l eines Anlagerungsprodukts von 8 mol Ethylenoxid an 1 mol Nonylphenol enthält, gekocht. Nach erneutem Spülen bei 20°C wird die Ware getrocknet. Man erhält einen sehr farbstarken, egalen und konturenscharfen Druck mit guten Reib- und Naßechtheiten.

Um das Auswaschverhalten des Verdickungsmittels zu beurteilen, wird ein ca. 5 x 15 cm großer Streifen aus dem fixierten, nicht gewaschenen Druck in einem Testgerät der Fa. Ahiba AG (Schweiz), Typ WBRG 7 bei 80°C in destilliertem Wasser behandelt. Nach 5 min wurde der nasse Streifen dem Gerät entnommen. Er fühlte sich weder glitschig noch schleimig an. Der Streifen wurde 2 min bei 110°C getrocknet. Er hatte danach einen sehr weichen fließenden Griff.

### Beispiel 2

305 g des agglomerierten Polymerisats 1 werden in 9395 g Trinkwasser mit 2,685 mmol CaO/l Wasser (15° deutscher Härte) unter Rühren eingestreut. Das Polymer läßt sich gut verteilen und klumpt nicht zusammen. Nach 3 minütigem Rühren mit einem Schnellrührer erhält man eine homogene Paste. Anschließend fügt man unter Rühren 300 g des blauen Dispersionsfarbstoffs C.I. Disperse Blue 87 in der flüssigen, 20 %igen, nicht ionogenen gefinishten Handelsform zu und rührt den Ansatz 3 min mit einem Schnellrührer bei 10 000 Upm.

Die Druckpaste wird anschließend mit einer Rotationsfilmdruckmaschine auf ein Polyester-Satin-Gewebe gedruckt. Das bedruckte Material wird 3 min bei 100°C getrocknet und anschließend 10 min bei 170°C einer Heißdampffixierung unterworfen. Die Ware wird dann mit Wasser einer Temperatur von 20°C gespült und anschließend mit einer Waschflotte, die 1 g/l eines Anlagerungsprodukts von 8 mol Ethylenoxid an 1 mol Nonylphenol und 1 g/l 50 %ige wäßrige Natronlauge enthält, bei 60°C gewaschen. Nach erneutem Spülen bei 20°C wird die Ware getrocknet. Man erhält einen sehr farbstarken, egalen und konturenscharfen Druck mit guten Reib- und Naßechtheiten. Das Auswaschverhalten des Verdickungsmittels aus dem bedruckten Material wird wie in Beispiel 1 beschrieben, geprüft. Ein nasser Probestreifen fühlt sich nach der 5minütigen Behandlung in destilliertem Wasser weder glitschig noch schleimig an. Der Probestreifen wird dann 2 min bei einer Temperatur von 110°C getrocknet. Er hatte danach einen sehr weichen, fließenden Griff.

### Beispiele 3 bis 5

Das Beispiel 1 wurde jeweils mit den Ausnahmen wiederholt, daß 5 man die in der folgenden Tabelle angegebenen Mengen an agglomerierten Polymerisaten 2 bis 4 in den dort jeweils angegebenen Mengen einsetzte.

**Tabelle**

| Agglomeriertes Polymerisat Nr. | Eingesetzte Menge | | Viskosität der Druckpaste | Viskositätsabfall durch Farbstoffzugabe |
|---|---|---|---|---|
| | Verdicker | Trinkwasser | mPas (Poise) | mPas (Poise) |
| 2 | 380 g | 7970 g | 4000 (40) | 4300 (43) |
| 3 | 440 g | 7910 g | 4000 (40) | 2800 (28) |
| 4 | 410 g | 7940 g | 4000 (40) | 3300 (33) |

Die Druckergebnisse und die Auswaschbarkeit sind in allen Fällen denen aus Beispiel 1 vergleichbar.

### Vergleichsbeispiel 1

Beispiel 1 wurde mit der Ausnahme wiederholt, daß man 320 g des agglomerierten Polymerisats gemäß Vergleich in 8030 g Wasser mit 2,685 mmol CaO/l Wasser (15° deutscher Härte) einsetzte. Die Viskosität der Druckpaste betrug 4000 mPas (40 Poise), der Viskositätsabfall nach Zugabe des Farbstoffs betrug 4300 mPas (43 Poise). Die Druckergebnisse sind zwar sehr ähnlich zu denen gemäß Beispiel 1, jedoch ist die Auswaschbarkeit des Verdickungsmittels ungenügend. Das Auswaschverhalten wurde geprüft wie in Beispiel 1 angegeben. Das bedruckte Gewebe war jedoch nach einer Behandlung von 5 min im Testgerät sehr stark glitschig und schmierig. Die Behandlung wurde daher noch für weitere 15 min fortgesetzt, wobei sich keine Verbesserung ergab. Die Drucke waren unverändert glitschig. Das Gewebe wurde dann 2 min bei einer Temperatur von 102°C getrocknet. Es war danach steif und hatte einen harten Griff.

## Patentansprüche

1. Agglomerierte Polymerteilchen aus wasserquellbaren Polymerisaten mit einem mittleren Teilchendurchmesser von 20 bis 5000 µm, wobei die agglomerierten Polymerteilchen aus Primärteilchen mit einem mittleren Teilchendurchmesser von 0,1 bis 15 µm bestehen, und durch Polymerisieren von wasserlöslichen Monomeren in Gegenwart von Reglern und von Vernetzungsmitteln nach Art einer Wasser-in-Öl-Polymerisation und anschließendes azeotropes Entwässern der die Primärteilchen enthaltenden Wasser-in-Öl-Polymeremulsionen zu mindestens 80 % in Gegenwart von agglomerierend wirkenden Polyalkylenglykolen, die
(a) durch Anlagerung von C₂- bis C₄-Alkylenoxiden an Alkohole, Phenole, Amine oder Carbonsäuren erhältlich sind, und
(b) mindestens 2 Alkylenoxid-Einheiten einpolymerisiert enthalten,
herstellbar sind und beim Eintragen in ein wäßriges Medium in die Primärteilchen zerfallen, dadurch gekennzeichnet, daß man die Regler in Mengen von 1 bis 10 Gew.-% und die Vernetzer in Mengen von mindestens 1000 ppm, jeweils bezogen auf die Monomeren, bei der Wasser-in-Öl-Polymerisation einsetzt.

2. Verfahren zur Herstellung von agglomerierten Polymerteilchen aus wasserquellbaren Polymerisaten nach Anspruch 1 durch Polymerisieren von wasserlöslichen Monomeren in der wäßrigen Phase einer Wasser-in-Öl-Emulsion in Gegenwart von Wasser-in-Öl-Emulgatoren, Polymerisationsinitiatoren, Reglern und Vernetzern und anschließendes azeotropes Entwässern der Wasser-in-Öl-Polymeremulsionen zu mindestens 80 % in Gegenwart von 1 bis zu 40 Gew.-%, bezogen auf die Polymeren, an agglomerierend wirkenden Polyalkylenglykolen, die
(a) durch Anlagerung von C₂- bis C₄-Alkylenoxiden an Alkohole, Phenole, Amine oder Carbonsäuren erhältlich sind, und
(b) mindestens 2 Alkylenoxid-Einheiten einpolymerisiert enthalten,
unter Agglomeration der Primärteilchen der Wasser-in-Öl-Polymeremulsionen und Isolieren der agglomerierten Polymerteilchen, dadurch gekennzeichnet, daß man die Regler in Mengen von 1 bis 10 Gew.-% und die Vernetzer in Mengen von mindestens 1000 ppm, jeweils bezogen auf die Monomeren einsetzt.

3. Verfahren nach Anspruch 2, dadurch gekennzeichnet, daß man Acrylsäure, Methacrylsäure, Acrylamid, Methacrylamid, N-Vinylpyrrolidon, N-Vinylimidazol, N-Vinylformamid, 2-Acrylamido-2-methylpropansulfonsäure, Hydroxyethylacrylat, Hydroxypropylacrylat, N-Methylolacrylamid oder deren Gemische als wasserlösliche Monomere einsetzt.

4. Verwendung der agglomerierten Polymerteilchen nach Anspruch 1 als Verdickungsmittel zur Erhöhung der Viskosität wäßriger Systeme.

5. Verwendung der agglomerierten Polymerteilchen nach Anspruch 1 als Verdickungsmittel für Druckpasten zum Bedrucken von Textilien.

6. Verwendung der agglomerierten Polymerteilchen nach Anspruch 1 als Verdickungsmittel in Druckpasten, die als Farbstoff mindestens einen Reaktivfarbstoff und/oder mindestens einen Dispersionsfarbstoff enthalten.

## Claims

1. Agglomerated particles of water-swellable addition polymers, the agglomerated particles having an average particle diameter of from 20 to 5000 µm, consisting of primary particles having an average particle diameter of from 0.1 to 15 µm, being preparable by polymerization of water-soluble monomers in the presence of regulators and of crosslinking agents in the manner of a water-in-oil polymerization and subsequent azeotropic removal of not less than 80% of the water from the water-in-oil polymer emulsions that contain the primary particles in the presence of agglomerating polyalkylene glycols which
(a) are obtainable by an addition reaction of C₂-C₄-alkylene oxides with alcohols, phenols, amines or carboxylic acids, and
(b) contain at least 2 polymerized alkylene oxide units,
and disintegrating into the primary particles on introduction into an aqueous medium, characterized in that the water-in-oil polymerization is carried out using the regulators in amounts from 1 to 10% by weight and the crosslinkers in amounts of at least 1000 ppm, each based on the monomers.

2. A process for preparing agglomerated particles of water-swellable addition polymers as claimed in claim 1 by polymerizing water-soluble monomers in the aqueous phase of a water-in-oil emulsion in the presence of water-in-oil emulsifiers, polymerization initiators, regulators and crosslinkers and subsequent azeotropic removal of not less than 80% of the water from the water-in-oil polymer emulsions in the presence of from 1 to 40% by weight, based on the polymers, of agglomerating polyalkylene glycols which
(a) are obtainable by an addition reaction of C₂-C₄-alkylene oxides with alcohols, phenols, amines or carboxylic acids, and
(b) contain at least 2 polymerized alkylene oxide units,
by agglomeration of the primary particles of the water-in-oil polymer emulsions and isolating the agglomerated polymer particles, characterized in that it comprises using the regulators in amounts from 1 to 10% by weight and the crosslinkers in amounts of at least 1000 ppm, each based on the monomers.

3. A process as claimed in claim 2, characterized in that the water-soluble monomers used are acrylic acid, methacrylic acid, acrylamide, methacrylamide, N-vinylpyrrolidone, N-vinylimidazole, N-vinylformamide, 2-acrylamido-2-methylpropanesulfonic acid, hydroxyethyl acrylate, hydroxypropyl acrylate, N-methylolacrylamide or mixtures thereof.

4. The use of the agglomerated polymer particles of claim 1 as thickeners for increasing the viscosity of aqueous systems.

5. The use of the agglomerated polymer particles of claim 1 as thickeners for textile print pastes.

6. The use of the agglomerated polymer particles of claim 1 as thickeners in print pastes containing at least one reactive dye and/or at least one disperse dye.

## Revendications

1. Particules polymères agglomérées constituées par des polymères manifestant une aptitude à gonfler dans l'eau, possédant un diamètre de particule moyen de 20 à 5000 µm, dans lesquelles les particules polymères agglomérées sont constituées par des particules primaires possédant un diamètre de particule moyen de 0,1 à 15 µm et peuvent être préparées par polymérisation de monomères hydrosolubles en présence de régulateurs et d'agents de réticulation conformément à une polymérisation eau-dans-l'huile et par déshydratation azéotrope ultérieure des émulsions polymères du type eau-dans-l'huile contenant les particules primaires, jusqu'à concurrence d'au moins 80%, en présence de polyalkylèneglycols ayant un effet d'agglomération,
(a) que l'on obtient par fixation par addition d'oxydes d'alkylènes en C₂-C₄ sur des alcools, des phénols, des amines ou des acides carboxyliques et
(b) qui contiennent au moins deux unités d'oxydes d'alkylènes introduites par polymérisation,
et qui, lorsqu'on les introduit dans un milieu aqueux, se décomposent en particules primaires, caractérisées en ce qu'on met en oeuvre les régulateurs dans des quantités de 1 à 10% en poids et les agents de réticulation dans des quantités d'au moins 1000 ppm chaque fois rapportées aux monomères dans la polymérisation du type eau-dans-l'huile.

2. Procédé pour la préparation de particules polymères agglomérées à partir de polymères manifestant une aptitude au gonflement dans l'eau selon la revendication 1, par polymérisation de monomères hydrosolubles dans la phase aqueuse d'une émulsion du type eau-dans-l'huile en présence d'émulsifiants du type eau-dans-l'huile, d'initiateurs de la polymérisation, de régulateurs et d'agents de réticulation, et par déshydratation azéotrope ultérieure des émulsions polymères du type eau-dans-l'huile jusqu'à concurrence d'au moins 80%, en présence, à concurrence de 1 à 40% en poids rapportés aux polymères, de polyalkylèneglycols ayant un effet d'agglomération,
(a) que l'on obtient par fixation par addition d'oxydes d'alkylènes en C₂-C₄ sur des alcools, des phénols, des amines ou des acides carboxyliques et
(b) qui contiennent au moins deux unités d'oxydes d'alkylènes introduites par polymérisation,
par agglomération des particules primaires des émulsions du type eau-dans-l'huile et par isolation des particules polymères agglomérées, caractérisé en ce qu'on met en oeuvre les régulateurs dans des quantités de 1 à 10% en poids et les agents de réticulation dans des quantités d'au moins 1000 ppm chaque fois rapportées aux monomères.

3. Procédé selon la revendication 2, caractérisé en ce qu'on met en oeuvre l'acide acrylique, l'acide méthacrylique, l'acrylamide, le méthacrylamide, la N-vinylpyrrolidone, le N-vinylimidazole, le N-vinylformamide, l'acide 2-acrylamido-2-méthylpropanesulfonique, l'acrylate d'hydroxyéthyle, l'acrylate d'hydroxypropyle, le N-méthylolacrylamide ou encore leurs mélanges, à titre de monomères hydrosolubles.

4. Utilisation des particules polymères agglomérées selon la revendication 1, comme agent épaississant pour augmenter la viscosité de systèmes aqueux.

5. Utilisation des particules polymères agglomérées selon la revendication 1, à titre d'épaississants pour des pâtes d'impression pour l'impression de matières textiles.

6. Utilisation des particules polymères agglomérées selon la revendication 1, à titre d'épaississants dans des pâtes d'impression qui contiennent, à titre de colorants, au moins un colorant réactif et/ou au moins un colorant de dispersion.
